# EUROPÄISCHE PATENTSCHRIFT

(11) **EP 2 056 414 B1**
(45) Veröffentlichungstag und Bekanntmachung des Hinweises auf die Patenterteilung: **07.10.2015**
(21) Anmeldenummer: 07021152.9
(22) Anmeldetag: 30.10.2007
(51) Int. Cl.: H01S 3/11, H01S 3/13, H01S 3/136

(54) **Pulsstabilisierung eines gütegeschalteten Festkörperlasers**
Impulse stabilisation of a Q-switched solid-state laser
Stabilisation d'impulsion d'un laser solide à modulation de qualité

(43) Veröffentlichungstag der Anmeldung: 06.05.2009
(73) Patentinhaber: Trumpf Laser Marking Systems AG, 7214 Grüsch (CH)
(72) Erfinder: Kruse, Dietmar, 7208 Malans (CH)
(74) Vertreter: Kohler Schmid Möbus Patentanwälte

(56) Entgegenhaltungen:
- JP-A- 60 045 081
- US-A- 3 747 019
- US-A- 5 018 152
- US-A- 5 128 949
- XIE W ET AL: "FLUORESCENCE FEEDBACK CONTROL OF AN ACTIVE Q-SWITCHED DIODE-PUMPED ND:YVO4 LASER" APPLIED OPTICS, OSA, OPTICAL SOCIETY OF AMERICA, WASHINGTON, DC, Bd. 39, Nr. 6, 20. Februar 2000 (2000-02-20), Seiten 978-981, XP000928335 ISSN: 0003-6935
- MORISHIGE Y ET AL: "OUTPUT-STABILIZED HIGH-REPETITION-RATE 1.545-MUM Q-SWITCHED ER:GLASS LASER" OPTICS LETTERS, OSA, OPTICAL SOCIETY OF AMERICA, WASHINGTON, DC, US, Bd. 9, Nr. 5, 1. Mai 1984 (1984-05-01), Seiten 147-149, XP000710430 ISSN: 0146-9592

## Beschreibung

Die vorliegende Erfindung betrifft einen gütegeschalteten Festkörperlaser umfassend wenigstens eine Pumpquelle, einen Laserresonator, in dem ein von der Pumpquelle gepumptes Lasermedium und ein Güteschalter angeordnet sind, einen Detektor zum Detektieren eines vom gepumpten Lasermedium abgestrahlten Fluoreszenzlichts und eine Regelung zum Einstellen der Pulsenergie eines Laserpulses anhand der Intensität des detektierten Fluoreszenzlichts, sowie ein Verfahren zur Regelung der Pulsenergie des Laserpulses eines gütegeschalteten Festkörperlasers.

Ein derartiger gütegeschalteter Festkörperlaser ist beispielsweise durch US 5,018,152 bekannt geworden.

Gepulste, gütegeschaltete Festkörperlaser sind aus vielen Bereichen der Lasermaterialbearbeitung nicht mehr wegzudenken. Wesentlicher Bestandteil solcher Bearbeitungssysteme ist die eigentliche Laserstrahlquelle, bestehend aus einem Resonator, einem laseraktiven Medium und einem Güteschalter. Als laseraktive Medien werden Wirtskristalle (YAG, YVO₄, YLF, GdVO₄) verwendet, die mit Seltenen-Erden-lonen (Nd³⁺, Yb³⁺, Er³⁺) dotiert sind. Solche Kristalle zeichnen sich durch Laserübergänge aus, die eine Fluoreszenzlebensdauer von einigen zehn Mikrosekunden bis hin zu wenigen Millisekunden besitzen. Sie sind dadurch in der Lage, in gütegeschalteten Laserresonatoren die in das Lasermedium hineingepumpte Energie während des Zustandes niedriger Güte zu speichern. Dieser Vorgang wird als Inversionsaufbau bezeichnet. Die im Lasermedium gespeicherte Energie wird teilweise in Form von Fluoreszenzstrahlung frei. Die Intensität der Fluoreszenzstrahlung ist ein Maß für die gespeicherte Energiemenge. Bei der Umschaltung von der niedrigen auf eine hohe Resonatorgüte baut sich die Inversion schlagartig ab und die gespeicherte Energie wird in Form eines kurzen Pulses abgegeben. Als passive Güteschalter kommen in der Regel sättigbare Absorber zum Einsatz, als aktive Güteschalter akustooptische oder elektrooptische Modulatoren. Pulsenergie und Putsspitzenleistung hängen davon ab, wie viel Energie bis zum Zeitpunkt der Pulsemission in das Lasermedium hineingepumpt wurde, und damit von der Restinversion zum Zeitpunkt des Umschaltens von hoher zu niedriger Güte, von der Pumpintensität und von der Dauer des Zustandes niedriger Güte. Der Umschaltvorgang des Resonators von niedriger zu hoher Güte kann repetitiv erfolgen, so dass der Laser einen Pulszug aus kurzen Pulsen (mit Pulsdauem von wenigen Nanosekunden bis einigen Mikrosekunden) entsprechend der Schaltfrequenz emittiert.

Insbesondere bei der Mikrobearbeitung und bei der Laserbeschriftung mit gütegeschalteten Festkörperlasern ist es für ein gutes Bearbeitungsergebnis erforderlich, dass sämtliche Pulse annähernd dieselbe Pulsenergie und Pulsspitzenleistung besitzen. Eine ungenügende Puis-zu-Puls-Stabüität führt zu inhomogenen Beschriftungen und kann Materialschädigungen zur Folge haben. Ein besonderes Problem stellen die beispielsweise bei der Vektormarkierung auftretenden Beschriftungspausen dar, die z.B. bei einem Sprung vom Ende eines Vektors zum Beginn des nächsten auftreten. Sie bedingen, dass der Laser statt eines kontinuierlichen Pulszuges viele zeitlich begrenzte Pulszüge emittieren muss. Während die Dauer des Zustandes niedriger Güte zwischen den einzelnen Pulsen des Pulszuges konstant ist, befindet sich der Laser vor dem ersten Puls deutlich länger im Zustand niedriger Güte. Wenn zwischen den Pulszügen nicht die Pumpintensität reduziert wird, wird vor dem ersten Puls deshalb deutlich mehr Energie in das Lasermedium gepumpt. Der erste Puls eines Pulszuges enthält aus diesem Grund deutlich mehr Energie und eine deutlich höhere Spitzenleistung als die Folgepulse.

In der Regel werden keine aktiven Vorkehrungen getroffen, um die Puls-zu-Puls-Stabilität eines gütegeschalteten Festkörperlasers zu verbessern, Die Puls-zu-Puls-Stabilität resultiert aus dem Aufbau der Strahlquelle und ist abhängig vom Arbeitspunkt (Pumpleistung, Repetitionsfrequenz, Puls-Pause-Verhältnis). Dennoch sind Techniken bekannt, um die Puls-zu-Puls-Stabilität eines gütegeschalteten Festkörperlasers zu verbessern. Verschiedene Techniken beruhen auf der schnellen Detektion des eigentlichen Laserpulses und seiner nachgelagerten Modifikation (z.B. US 3,747,019 und WO 99/04465 A1). So offenbart beispielsweise WO 99/04465 A1 ein gepulstes Lasersystem mit einer präzisen Pulsenergiesteuerung. Diese wird dadurch erzielt, dass ein schneller Pulsenergiedetektor mit Antwortzeiten im Nanosekundenbereich die Pulsenergie in ein entsprechendes elektrisches Signal umwandelt, das bei Erreichen eines definierten Wertes den Puls abschneidet. Diese Techniken weisen allerdings folgende Nachteile auf:
- Es ist ein resonatorextemer elektrooptischer Modulator erforderlich, um hinreichend schnell den Puls beschneiden zu können. Dieser ist teuer. Dasselbe gilt für den Treiber, der ihn ansteuert.
- Damit der Modulator vor dem Passieren des Laserpulses korrekt angesteuert werden kann, muss der Laserpuls zeitlich verzögert werden. Das erfordert eine optische Verzögerungsstrecke, die als zusätzliches optisches Element und aufgrund der mit ihr verbundenen Nachteile, wie beispielsweise Leistungsverlust, mögliche Dejustage und größerer Bauraum, zu vermeiden ist.
- Die Detektions- und Regelelektronik muss sehr schnell sein. Vom Zeitpunkt der Detektion des Pulses an muss sie innerhalb weniger Nanosekunden die korrekte Abschwächung ermitteln. Eine derart schnelle Elektronik ist aufwendig, fehleranfällig und teuer.
- Da die Abschwächung auf Polarisationsdrehung beruht, lässt sich dieses Verfahren nicht bei unpolarisierten Lasern anwenden.

Diese Nachteile umgeht das aus US 5,018,152 bekannte gepulste Lasersystem mit einer Fluoreszenzüberwachung zur gezielten Pumpleistungs- und Pulsenergieregelung. Statt des eigentlichen Laserpulses wird die im Lasermedium aufgebaute Inversion anhand der Fluoreszenzintensität kontinuierlich detektiert. Überschreitet die Fluoreszenzintensität einen vorgegebenen Wert, so wird die Pumpleistung reduziert. Auf diese Weise wird erreicht, dass vor der Pulsemission stets dieselbe Energie im Lasermedium gespeichert ist. Nachteilig ist allerdings, dass sich die Inversion über die Pumpleistung nur relativ langsam verändern lässt. Die relevante Zeitskala ist hier durch die Schalfigeschwindigkeit der Pumpleistung gegeben. Bei lampengepumpten Systemen lässt sich die Lichtintensität aufgrund des trägen Verhaltens der Lampen nicht innerhalb weniger Mikrosekunden schalten. Bei diodengepumpten Systemen ist dieses zwar prinzipiell möglich. Die dazu benötigten Stromtreiber mit Schaltgeschwindigkeiten im Mikrosekundenbereich beinhalten jedoch den Nachteil, dass sie sich nur mit erhöhtem Aufwand realisieren lassen oder dass sie andernfalls ein erhöhtes Risiko für die Betriebssicherheit der angesteuerten Diodenpumpquelle darstellen. Bei Repetitionsfrequenzen oberhalb ca. 10 kHz stellt die Pumpleistung deshalb keinen geeigneten Regelparameter dar. Eine Verbesserung der Puls-zu-Puls-Stabilität ist mit dem in US 5,018,152 offenbarten Verfahren hier nur sehr eingeschränkt möglich. Anwendungen im Bereich der Mikrobearbeitung oder des Laserbeschriftens verwenden jedoch typischerweise Repetitionsfrequenzen in diesem Bereich.

Die Aufgabe der Erfindung besteht demgegenüber darin, bei einem gütegeschalteten Festkörperlaser der eingangs genannten Art die Puls-zu-Puls-Stabilität, insbesondere auch bei Repetitionsraten oberhalb ca. 10 kHz, zu verbessern.

Diese Aufgabe wird erfindungsgemäß dadurch gelöst, dass die Regelung ein im Strahlengang des Laserpulses vorgesehenes optisches Stellelement aufweist, das geeignet ist, die Pulsenergie des Laserpulses zu beeinflussen.

Erfindungsgemäß wird zur Beeinflussung der Pulsenergie nicht die Inversion, d.h. die im Lasermedium gespeicherte Energie, möglichst auf konstantes Niveau gebracht, sondern lediglich die Pulsenergie. Dazu wird ein definiertes Zeitintervall vor der Emission eines Laserpulses die im Lasermedium gespeicherte Energie anhand der Fluoreszenzintensität optisch gemessen. Das Messen von der Fluorescenz zur Beeinflussing der Pulsenergie ist im Allgemeinen bekannt aus der Patentschrift US 5 128 949 und aus Applied Optics, Vol.39, No.6, 20-2-2000, Seiten 978-981. Das Verfahren basiert auf der Tatsache, dass aus dem Messwert bei bekannter Dauer des Zeitintervalls und bei bekannter Pumpleistung eindeutig auf die gespeicherte Energie zum Zeitpunkt der Emission des Laserpulses und damit auf die zu erwartende Pulsenergie geschlossen werden kann. Eine schnelle Elektronik vergleicht das Messsignal mit einem variabel einstellbaren Sollwert und generiert daraus ein Korrektursignal. Dieses wird auf das optische Stellglied gegeben, das geeignet ist, die Pulsenergie des nachfolgenden Pulses zu beeinflussen. Korrektursignal und Stellglied sind so beschaffen, dass die Auswirkung der Abweichung vom Sollwert auf die Pulsenergie minimiert wird. Das optische Stellelement ist in der Lage, in hinreichend kurzer Zeit die Pulsenergie des Lasers zu verändern. Genauer gesagt muss die Summe aus Berechnungsdauer des Korrektursignals und Reaktionszeit des Stellgliedes kürzer sein als der zeitliche Abstand zwischen der Fluoreszenzmessung und der Emission des Laserpulses, damit der nachfolgende Laserpuls in seiner Pulsenergie beeinflusst wird. Dieser zeitliche Abstand ist typischerweise im Mikrosekundenbereich und kürzer als 100 µs, insbesondere kürzer 10 µs. Die Messung der Fluoreszenzintensität erfolgt vorzugsweise periodisch mit der Repetitionsfrequenz, und zwar typischerweise im Mikrosekundenbereich weniger als 100 µs, insbesondere weniger als 10 µs, vor der Emission jedes einzelnen Laserpulses.

Ein Beispiel für ein geeignetes Stellglied ist das unvollständige Öffnen des resonatorintemen Güteschalters. Das unvollständige Öffnen bewirkt während des Pulsaufbaus und während der Pulsemission erhöhte Umlaufverluste im Resonator. Als Folge wird die im Lasermedium gespeicherte Energie nur unvollständig entlassen und deshalb die Pulsenergie reduziert.

Ein weiteres Beispiel für ein geeignetes optisches Stellglied ist ein externer Modulator, wie z.B. ein akustooptischer Modulator. Die Auswirkung auf die Pulsenergie basiert in diesem Fall darauf, dass der einfallende Laserstrahl ein transparentes Medium durchläuft, in dem ein variabler Anteil des Laserlichts an einer akustischen Welle aus dem eigentlichen Laserstrahl herausgebeugt wird. Bei linear polarisierten Festkörperiasern kann der externe Modulator alternativ ein elektrooptischer Modulator sein. In diesem Fall basiert die Auswirkung auf die Pulsenergie auf einer variablen Polarisationsdrehung. Durch anschliessende Trennung der senkrecht zueinander stehenden Polarisationsrichtungen bewirkt die Polarisationsdrehung eine variable Aufteilung der beiden Ausgangsstrahlen.

Bevorzugt handelt es sich bei dem Festkörperlaser um einen Grundmodelaser, der sich durch eine im Wesentlichen eindeutige und gleichbleibende transversale räumliche Verteilung des Laserpulses auszeichnet. Der Laserpuls ist damit weitestgehend durch die Höhe der im Lasermedium gespeicherten Energie und damit durch das Fluoreszenzsignal vorbestimmt. Bei Muitimodeniasern kann dagegen trotz identischem Fluoreszenzsignal aufgrund einer unterschiedlichen räumlichen Verteilung der im Lasermadium gespeicherten Energie die Energie (und die räumliche Verteilung) des Laserpulses schwanken.

Der erfindungsgemäße Festkörperlaser kann insbesondere auch eingesetzt werden, um die bei gepulst betriebenen Festkörperlasern typischerweise auftauchende Überhöhung des ersten Pulses eines Pulszuges zu minimieren. Dasselbe gilt für das thermische Einschwingen des Lasers. Über die erfindungsgemäße Regelung der Pulsenergie können die ersten Pulse des Pulszuges soweit abgeschwächt werden, dass sie sich in ihrer Pulsenergie nur noch geringfügig von den Folgepulsen unterscheiden, wodurch eine automatisierte Generierung der korrekten Abschwächung der ersten Pulse erreicht wird.

Der Festkörperlaser wird vorzugsweise bei konstanter Pumpleistung betrieben, um einen fixen zeitlichen Verlauf des Anstiegs der im Lasermedium gespeicherten Energie zwischen der Fluoreszenzmessung und der Emission des Laserpulses zu gewährleisten. So ergibt sich ein eindeutiger Zusammenhang zwischen dem Messsignal und der zu erwartenden Pulsenergie. Die Einstellung der Laserleistung erfolgt in diesem Fall vorzugsweise über dasselbe optische Stellglied, welches auch für die Pulsstabilisierung eingesetzt wird.

Die Erfindung betrifft in einem weiteren Aspekt auch ein Verfahren zur Regelung der Pulsenergie des Laserpulses eines gütegeschalteten Festkörperlasers, wobei die in einem Lasermedium gespeicherte Energie anhand eines vom gepumpten Lasermedium abgestrahlten Fluoreszenzlichts optisch detektiert wird und die Pulsenergie des Laserpulses resonatorintem oder resonatorextem anhand des detektierten Fluoreszenzlichts geregelt wird.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erste Ausführungsform des erfindungsgemäßen gütegeschalteten Festkörperlasers mit einem externen Modulator als Stellglied der Pulsenergieregelung;
- Fig. 2: eine zweite Ausführungsform des erfindungsgemäßen gütegeschalteten Festkörperlasers mit einem im Laserresonator vorgesehenen akustooptischen Modulator als Stellglied der Pulsenergieregelung; und
- Fig. 3: eine dritte Ausführungsform des erfindungsgemäßen gütegeschalteten Festkörperlasers mit einem im Laserresonator vorgesehenen elektrooptischen Modulator als Stellglied der Pulsenergieregelung.

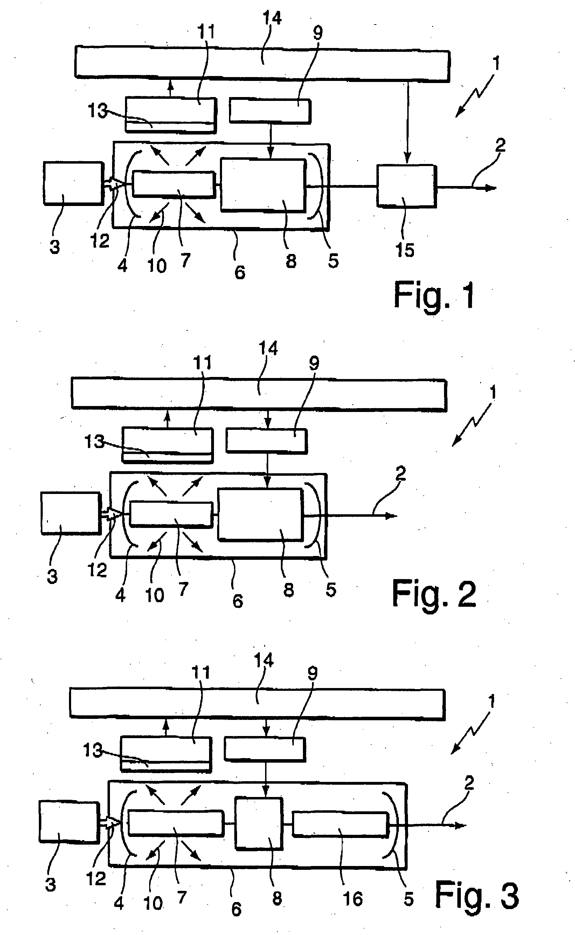

Der in **Fig. 1** gezeigte gütegeschaltete Festkörperlaser 1 dient zur Erzeugung von Laserpulsen **2** mit möglichst konstanter Pulsenergie.

Der Festkörperlaser 1 umfasst eine Pumpquelle **3**, einen durch zwei geeignete Spiegel **4**, **5** definierten Laserresonator **6**, in dem ein von der Pumpquelle 3 gepumptes laseraktives Medium (Lasermedium) 7 und ein aktiver Güteschalter (Q-Switch) **8** angeordnet sind, sowie einen Treiber 9 zum Ansteuern des aktiven Güteschalters 8. Als Lasermedium werden Wirtskristalle (YAG, YVO₄, YLF, GdVO₄) verwendet, die mit Seltenen-Erden-lonen (Nd³⁺, Yb³⁺, Er³⁺) dotiert sind. Solche Kristalle zeichnen sich durch Laserübergänge aus, die eine Fluoreszenzlebensdauer von einigen zehn Mikrosekunden bis hin zu wenigen Millisekunden besitzen, und sind dadurch in der Lage, in dem gütegeschalteten Laserresonator 6 die in das Lasermedium 7 hineingepumpte Energie während des Zustandes niedriger Güte zu speichern. Die im Lasermedium 7 gespeicherte Energie wird teilweise in Form von Fluoreszenzlicht **10** frei, dessen Intensität ein Maß für die gespeicherte Energiemenge und damit für die zu erwartende Energie des nachfolgenden Laserpulses 2 ist. Das Fluoreszenzlicht 10 wird mit einem Detektor (z.B. Fotodiode) **11** gemessen, der seitlich (also nicht entlang der optischen Achse des Resonators 6) auf das Lasermedium 7 gerichtet ist. Der Detektor 11 detektiert das Fluoreszenzlicht 10, das das Lasermedium 7 in denjenigen Raumwinkel emittiert, der auf die aktive Fläche des Detektors 11 fällt. Gegebenenfalls kann eine lichtsammelnde Optik zwischen Lasermedium 7 und Detektor 11 dazu dienen, den Raumwinkel und damit die auf den Detektor 11 fallende Intensität zu vergrößern. Die Fluoreszenzintensität wird bevorzugt periodisch mit der Repetitionsfrequenz gemessen, und zwar typischerweise im Mikrosekundenbereich weniger als 100 µs, insbesondere weniger als 10 µs, vor der Emission jedes einzelnen Laserpulses.

Das Pumplicht **12** der Pumpquelle 3 kann durch Abschattung und/oder durch einen Farbfilter **13** vom Detektor 11 ferngehalten werden. Idealerweise lässt der Farbfilter 13 nur diejenigen Wellenlängen auf den Detektor **11** fallen, die von optischen Übergängen herrühren, bei denen die Besetzung des oberen Energieniveaus des Lasermediums 7 beim anschließenden Laserpuls in einen energetisch niedrigeren Zustand überführt wird und dadurch den Laserpuls verstärkt.

Das Messsignal des Detektors **11** wird einer elektronischen Schaltung (Regelung) **14** zugeführt, dort elektronisch mit einem variabel einstellbaren Sollwert verglichen und aus der Differenz ein Korrektursignal berechnet. Dieses Korrektursignal wird einem resonatorexternen optischen Stellelement **15** zugeführt, dessen Reaktionszeiten kleiner als 10 µs sind und das geeignet ist, die Pulsenergie des aus dem Laserresonator 6 ausgekoppelten Laserpulses 2 zu beeinflussen. Das optische Stellglied 15 kann ein externer Modulator, wie z.B. ein akustooptischer Modulator (AOM) sein. Die Auswirkung auf die Pulsenergie basiert in diesem Fall darauf, dass der einfallende Laserstrahl ein transparentes Medium durchläuft, in dem ein variabler Anteil des Laserlichts an einer akustischen Welle aus dem eigentlichen Laserstrahl herausgebeugt wird. Bei linear polarisierten Festkörperlasern kann das optische Stellelement 15 alternativ ein elektrooptischer Modulator (EOM) sein. In diesem Fall basiert die Auswirkung auf die Pulsenergie auf einer variablen Polarisationsdrehung, Durch anschließende Trennung der senkrecht zueinander stehenden Polarisationsrichtungen bewirkt die Polarisationsdrehung eine variable Aufteilung der beiden Ausgangsstrahlen.

Die elektronische Verarbeitung des Messsignals des Detektors 11 kann prinzipiell mit Analogtechnik erfolgen. Eine AD-Wandlung und die nachfolgende Verarbeitung mittels Mikroprozessor bieten jedoch große Vorteile, da Sollwerte und Berechnungsfaktoren variabel angepasst werden können. Dieses ermöglicht etwa eine einfache Nachkalibrierung der Stabilisierung. Das berechnete Korrektursignal muss gegebenenfalls wieder analog gewandelt werden, bevor es zum optischen Stellelement 15 gelangt.

Vom Festkörperlaser der Fig. 1 unterscheiden sich die in Fig. 2 und 3 gezeigten Festkörperlaser 1 lediglich dadurch, dass hier das optische Stellelement innerhalb des Laserresonators 6 angeordnet und durch den aktiven Güteschalter 8 gebildet ist. In Fig. 2 ist der aktive Güteschalter 8 als AOM und in Fig. 3 als EOM mit einem naehgeschalteten Polarisator **16** ausgebildet. Bei diesen aktiv gütegeschalteten Systemen bewirkt das unvollständige Öffnen des Güteschalters 8 während des Pulsaufbaus und während der Pulsemission erhöhte Umlaufverluste im Laserresonator 6. Als Folge wird die im Lasermedium 7 gespeicherte Energie nur unvollständig entlassen und deshalb die Pulsenergie reduziert.

## Patentansprüche

1. Gütegeschalteter Festkörperlaser (1) zum Erzeugen von Laserpulsen (2) mit einstellbarer Pulsenergie, umfassend
- wenigstens eine Pumpquelle (3),
- einen Laserresonator (6), in dem ein von der Pumpquelle (3) gepumptes Lasermedium (7) und ein Güteschalter (8) angeordnet sind,
- einen Detektor (11) zum Detektieren eines vom gepumpten Lasermedium (7) abgestrahlten Fluoreszenzlichts (10),
- ein im Laserpulsstrahlengang vorgesehenes, einstellbares optisches Stellelement (8, 15) zum Erzeugen von variablen Umlaufverlusten im Laserresonator (6) während des Pulsaufbaus und der Pulsemission eines Laserpulses (2) oder zum Erzeugen von variablen Pulsenergieverlusten des ausgekoppelten Laserpulses (2), und
- eine Regelung (14), ausgelegt um anhand der Intensität des detektierten Fluoreszenzlichts (10) das optische Stellelement (8, 15) entsprechend einer gewünschten Pulsenergie des erzeugten bzw. des ausgekoppelten Laserpulses (2) einzustellen, und ausgelegt zur Detektion des Fluoreszenzlichtes (10) periodisch mit der Repetitionsfrequenz des Festkörperlasers (1), und zwar eine fest vorgegebene Zeitspanne vor jedem einzelnen Laserpuls (2).

2. Gütegeschalteter Festkörperlaser nach Anspruch 1, **dadurch gekennzeichnet, dass** die Reaktionszeiten des optischen Stellelements (8, 15) kleiner als ca. 100 µs, insbesondere kleiner als ca. 10 µs sind.

3. Gütegeschalteter Festkörperlaser nach einem der vorhergehenden Ansprüche, **dadurch gekennzeichnet, dass** das optische Stellelement (8) innerhalb des Laserresonators (6) angeordnet ist.

4. Gütegeschalteter Festkörperlaser nach Anspruch 3, **dadurch gekennzeichnet, dass** das optische Stellelement durch den resonatorinternen Güteschalter (8), insbesondere durch einen akustooptischen Modulator oder einen elektrooptischen Modulator, gebildet ist, dessen Öffnungszustand anhand der Intensität des detektierten Fluoreszenzlichts (10) geregelt wird.

5. Gütegeschalteter Festkörperlaser nach einem der Ansprüche 1 bis 2, **dadurch gekennzeichnet, dass** das optische Stellelement ein resonatorexterner Modulator (15), insbesondere ein akustooptischer Modulator oder ein elektrooptischer Modulator, ist.

6. Gütegeschalteter Festkörperlaser nach einem der vorhergehenden Ansprüche, **dadurch gekennzeichnet, dass** dem Detektor (11) ein Filter (13) vorgeordnet ist, der nur diejenigen Wellenlängen auf den Detektor (11) treffen lässt, die von optischen Übergängen herrühren, bei denen die Besetzung des oberen Energieniveaus beim anschließenden Laserpuls (2) in einen energetisch niedrigeren Zustand überführt wird und dadurch den Laserpuls (2) verstärkt.

7. Gütegeschalteter Festkörperlaser nach einem der vorhergehenden Ansprüche, **dadurch gekennzeichnet, dass** der gütegeschaltete Festkörperlaser (1) in einem System zur Materialbearbeitung, insbesondere zur Mikrobearbeitung oder zum Lasermarkieren, eingesetzt ist.

8. Verfahren zur Regelung der Pulsenergie des Laserpulses (2) eines gütegeschalteten Festkörperlasers (1), wobei die in einem Lasermedium (7) gespeicherte Energie anhand der Intensität eines vom gepumpten Lasermedium (7) abgestrahlten Fluoreszenzlichts (10) optisch detektiert wird, **dadurch gekennzeichnet,**
**dass** anhand der Intensität des detektierten Fluoreszenzlichts (10) die Umlaufverluste im Laserresonator (6) während des Pulsaufbaus und der Pulsemission eines Laserpulses (2) oder die Pulsenergieverluste des ausgekoppelten Laserpulses (2) entsprechend einer gewünschten Pulsenergie des erzeugten bzw. des ausgekoppelten Laserpulses (2) geregelt werden, und
**dass** das Fluoreszenzlicht (10) periodisch mit der Repetitionsfrequenz des Festkörperlasers (1) detektiert wird, und zwar eine fest vorgegebene Zeitspanne vor jedem einzelnen Laserpuls (2).

9. Verfahren nach Anspruch 8, **dadurch gekennzeichnet, dass** vor der Emission jedes einzelnen Laserpulses (2) die im Lasermedium (7) gespeicherte Energie anhand der Intensität des Fluoreszenzlichts (10) optisch detektiert wird.

## Claims

1. Q-switched solid-state laser (1) for generating laser pulses (2) with adjustable pulse energy, comprising
- at least one pump source (3),
- a laser resonator (6) in which a laser medium (7) pumped by the pump source (3) and a Q-switch (8) are arranged,
- a detector (11) for detecting fluorescent light (10) emitted by the pumped laser medium (7),
- an adjustable optical positioning element (8, 15) arranged in the laser pulse path, for generating variable circulation losses in the laser resonator (6) during pulse generation and during pulse emission of a laser pulse (2), or for generating variable pulse losses of the decoupled laser impulse (2), and
- a regulation (14), designed for adjusting the optical positioning element (8, 15) based on the intensity of the detected fluorescent light (10) to correspond to a desired pulse energy of the generated or decoupled laser pulse (2), and designed for periodically detecting the fluorescent light (10) with the repetition frequency of the solid-state laser (1), namely a fixed predetermined time period prior to each individual laser pulse (2).

2. Q-switched solid-state laser according to claim 1, **characterised in that** the reaction times of the optical positioning element (8, 15) are shorter than approx. 100 µs, in particular shorter than approx. 10 µs.

3. Q-switched solid-state laser according to one of the preceding claims, **characterised in that** the optical positioning element (8) is arranged inside the laser resonator (6).

4. Q-switched solid-state laser according to claim 3, **characterised in that** the optical positioning element is formed by the resonator-internal Q-switch (8), in particular by an acousto-optical modulator or an electro-optical modulator, the opening condition of which is regulated based on the intensity of the fluorescent light (10) detected.

5. Q-switched solid-state laser according to one of the claims 1 to 2, **characterised in that** the optical positioning element is a resonator-external modulator (15), in particular an acousto-optical modulator or an electro-optical modulator.

6. Q-switched solid-state laser according to one of the preceding claims, **characterised in that** the detector (11) is preceded by a filter (13), which will permit only those wavelengths to fall onto the detector (11) that originate from optical transitions where the population of the upper energy level of the subsequent laser pulse (2) is transferred to a low-energy condition and thus increases the laser pulse (2).

7. Q-switched solid-state laser according to one of the preceding claims, **characterised in that** the Q-switched solid-state laser (1) is used in a system for material processing, in particular for micro processing or laser marking.

8. Method for regulating the pulse energy of the laser pulse (2) of a Q-switched solid-state laser (1), whereby the energy stored in a laser medium (7) is optically detected by means of the intensity of a fluorescent light (10) emitted by the pumped laser medium (7),
**characterised in that**
the circulation losses in the laser resonator (6) are regulated based on the detected intensity of the fluorescent light (10) during pulse generation and pulse emission of a laser pulse (2), or the pulse energy losses of the decoupled laser pulse (2), are regulated according to a desired pulse energy of the generated or decoupled laser pulse (2), and **in that** the fluorescent light (10) is periodically detected with the repetition frequency of the solid-state laser (1), namely a fixed predetermined time period prior to each individual laser pulse (2).

9. Method according to claim 8, **characterised in that** the energy stored in the laser medium (7) is optically detected by means of the intensity of the fluorescent light (10) prior to the emission of each individual laser pulse (2).

## Revendications

1. Laser solide à commutation du facteur de qualité (1) conçu pour générer des impulsions laser (2) ayant une énergie d'impulsion réglable, comprenant
- au moins une source de pompage (3),
- un résonateur laser (6) dans lequel sont disposés un milieu laser (7) pompé par la source de pompage (3) et un commutateur du facteur de qualité (8),
- un détecteur (11) pour détecter une lumière fluorescente (10) rayonnée par le milieu laser (7) pompé,
- un élément de réglage optique (8, 15) réglable prévu dans le chemin optique des impulsions laser pour générer des pertes par aller-retour variables dans le résonateur laser (6) pendant la formation d'impulsion et l'émission d'impulsion d'une impulsion laser (2) ou pour générer des pertes d'énergie d'impulsion variables de l'impulsion laser (2) délivrée, et
- une régulation (14) qui est conçue pour régler, à l'aide de l'intensité de la lumière fluorescente (10) détectée, l'élément de réglage optique (8, 15) en fonction d'une énergie d'impulsion souhaitée de l'impulsion laser (2) générée et délivrée, et conçue pour détecter la lumière fluorescente (10) périodiquement à la fréquence de répétition du laser solide (1), et cela à un intervalle de temps fixe prédéfini avant chaque impulsion laser (2) individuelle.

2. Laser solide à commutation du facteur de qualité selon la revendication 1, **caractérisé en ce que** les temps de réaction de l'élément de réglage optique (8, 15) sont inférieurs à environ 100 µs, en particulier inférieurs à environ 10 µs.

3. Laser solide à commutation du facteur de qualité selon l'une des revendications précédentes, **caractérisé en ce que** l'élément de réglage optique (8) est disposé à l'intérieur du résonateur laser (6).

4. Laser solide à commutation du facteur de qualité selon la revendication 3, **caractérisé en ce que** l'élément de réglage optique est formé par le commutateur du facteur de qualité (8) interne au résonateur, en particulier par un modulateur acoustico-optique ou un modulateur électro-optique dont l'état d'ouverture est régulé à l'aide de l'intensité de la lumière fluorescente (10) détectée.

5. Laser solide à commutation du facteur de qualité selon l'une des revendications 1 à 2, **caractérisé en ce que** l'élément de réglage optique est un modulateur (15) externe au résonateur, en particulier un modulateur acoustico-optique ou un modulateur électro-optique.

6. Laser solide à commutation du facteur de qualité selon l'une des revendications précédentes, **caractérisé en ce que** le détecteur (11) est précédé par un filtre (13) qui ne laisse arriver au détecteur (11) que les longueurs d'onde qui proviennent de transitions optiques lors desquelles la population du niveau d'énergie supérieur est transférée dans un état énergétique plus bas lors de l'impulsion laser (2) suivante et l'impulsion laser (2) de ce fait renforcée.

7. Laser solide à commutation du facteur de qualité selon l'une des revendications précédentes, **caractérisé en ce que** le laser solide à commutation du facteur de qualité (1) est utilisé dans un système d'usinage de matière, en particulier de micro-usinage ou de marquage au laser.

8. Procédé de régulation de l'énergie d'impulsion de l'impulsion laser (2) d'un laser solide à commutation du facteur de qualité (1), selon lequel l'énergie stockée dans un milieu laser (7) est détectée optiquement à l'aide de l'intensité d'une lumière fluorescente (10) rayonnée par le milieu laser (7) pompé,
**caractérisé en ce**
**que** les pertes par aller-retour dans le résonateur laser (6) pendant la formation d'impulsion et l'émission d'impulsion d'une impulsion laser (2) ou les pertes d'énergie d'impulsion de l'impulsion laser (2) délivrée sont régulées, à l'aide de l'intensité de la lumière fluorescente (10) détectée, en fonction d'une énergie d'impulsion souhaitée de l'impulsion laser (2) générée et délivrée, et que la lumière fluorescente (10) est détectée périodiquement à la fréquence de répétition du laser solide (1), et cela à un intervalle de temps fixe prédéfini avant chaque impulsion laser (2) individuelle.

9. Procédé selon la revendication 8, **caractérisé en ce que** l'énergie stockée dans le milieu laser (7) est détectée optiquement à l'aide de l'intensité de la lumière fluorescente (10) avant l'émission de chaque impulsion laser (2) individuelle.
